# EUROPEAN PATENT APPLICATION

(11) **EP 4 671 328 A1**
(43) Date of publication of application: **31.12.2025**
(21) Application number: 24759990.5
(22) Date of filing: 23.01.2024
(51) Int. Cl.: C08L 83/07, B32B 27/00, C08K 5/21, C08L 83/05, C09D 5/02, C09D 7/63, C09D 183/05, C09D 183/07

(54) **SILICONE EMULSION COMPOSITION**

(30) Priority: 20.02.2023 JP 2023024595
(71) Applicant: SHIN-ETSU CHEMICAL CO., LTD., Tokyo 1000005 (JP)
(72) Inventor: SHIRAKAMI Kento, Annaka-shi, Gunma 379-0224 (JP); NAKAYAMA Ken, Annaka-shi, Gunma 379-0224 (JP); YAMAMOTO Kenji, Annaka-shi, Gunma 379-0224 (JP); HIROKAMI Munenao, Annaka-shi, Gunma 379-0224 (JP)
(74) Representative: Schicker, Silvia
(86) International application number: PCT/JP2024/001730
(87) International publication number: WO 2024/176683

(57) **Abstract**

The present invention is an addition reaction-curable silicone emulsion composition containing at least one ureide compound (I) selected from non-polymeric organic compounds having at least one ureide group per molecule and organopolysiloxane (II) having at least two alkenyl groups per molecule, wherein the addition reaction-curable silicone emulsion composition contains 1.0 part by mass or more of the ureide compound (I) and 100.0 parts by mass or more of the water (VI) based on 100 parts by mass of the organopolysiloxane (II). This can provide: a silicone emulsion composition that provides a cured film having suitable release force and a high residual adhesion ratio against an adhesive, while having good coatability and good adhesiveness for paper or plastic film base material regardless of its type; and a release film wherein a cured film of the silicone emulsion composition is formed.

## Description

### TECHNICAL FIELD

The present invention relates to: an addition reaction-curable silicone emulsion composition with favorable adhesiveness to paper or plastic film base material; and a release film using this composition.

### BACKGROUND ART

Conventionally, as a silicone composition for release paper used for paper or plastic film base material, various compositions are known. Among these, solvent-type silicone have been widely used in view of release properties and being usable for a comparatively large variety of base material.

However, in recent years, it has become necessary to take measures such as reducing solvent usage and not discharging solvents to the outside by collecting used solvents from aspects of environmental pollution, safety, and hygiene, etc. Among these, as a method for reducing solvent usage it is effective to use non-solvent-type silicone. However, in order to apply these onto paper, laminated paper or plastic film base material uniformly with a film thickness of 0.1 to 1.0 g/m², an expensive application apparatus and technique are needed, and therefore replacing a solvent-type silicone with a non-solvent-type silicone is generally not a method that can be easily adopted. When applying the non-solvent-type silicone at 1.0 g/m² or more, it is not favorable due to an increase in production costs.

Other effective means for reducing solvent usage include using an emulsion-type silicone. Silicones of such a type have been conventionally used, and known examples thereof include: a silicone obtained by mixing an emulsion composed of an organovinylpolysiloxane, a platinum compound, an emulsifier, and water, and an emulsion composed of an organohydrogenpolysiloxane, an emulsifier, and water; a silicone obtained by emulsion polymerization; a silicone obtained by mixing a product obtained by emulsifying organovinylsiloxane or organohydrogensiloxane by using a certain emulsifier and an emulsion of a platinum compound.

Since these silicones can be optionally diluted with water, an expensive application apparatus and technique for thin film application are not necessary as in the case of a non-solvent-type silicone, and there is an advantage that such silicones can be used almost similarly to a solvent-type silicone.

However, emulsion-type silicones have not been widely used at the moment because of drawbacks associated with using water as a dispersion medium. One drawback is that high temperature cure is necessary due to the high latent heat of the evaporation of water and thus curability is poor when compared with a solvent-type silicone or a non-solvent-type silicone. Another drawback is that an emulsion-type silicone has poor wettability and poor adhesiveness to base material due to high surface tension of water. These drawbacks are serious problems especially for plastic film base material, and can be said to be a cause for hardly being used.

Many proposals for improvement have been made to solve these problems. For example, Patent Document 1 discloses using organopolysiloxane having an alkenyl group at a molecular end. Although the curability is improved by having an alkenyl group at a molecular end, this is intended for paper base material and does not provide sufficient adhesiveness to plastic film base material.

Patent Document 2 discloses blending an emulsion including a non-silicone polymer. This exhibits a light release property to a porous paper base material and its curability is also improved. However, this is also intended to improve properties for paper base material and does not provide sufficient adhesiveness when applied to a plastic film base material.

In addition, as a means for improving adhesiveness, it is reported to make a base polymer to have a branched structure having an RSiO_{3/2} unit (Patent Document 3). Although this provides good adhesiveness to various plastic base materials, organopolysiloxane containing a large amount of trifunctional siloxane units and alkenyl groups needs to take up 50 mass% or more as an adhesion exhibiting component, and it required heavy releasing force from an adhesive after being formed in a release film when attempting to raise adhesiveness further and thus made it difficult to adjust a releasing force suitable for practical use.

Patent Document 4 discloses a method for improving adhesiveness by using a silane coupling agent. In this disclosure, the use of glycidoxysilane can provide a film having high re-adhesion ratio with low migration after 7 days and, but the disclosure is intended mainly for in-line coating.

Patent Document 5 discloses a method for improving adhesiveness by using an undercoat layer formed using a coating liquid made of a silane coupling agent containing a specific amount of an anionic antistatic agent. Hydroxyl groups generated by hydrolysis and organic groups possessed by the silane coupling agent strengthen the interaction between base material, undercoat layer, and release layer. However, the number of processes increase since extension is performed after forming the undercoating layer.

Patent Document 6 discloses a method using silane having an epoxycyclohexyl group, and Patent Document 7 discloses methods such as using a reaction product of a liquid polyorganosiloxane having at least one alkenyl group and at least one silanol group and a hydrolysable silane having at least one epoxide group, as an additive. Although such methods improve the adhesiveness between base material and a release layer by the anchor effect of an epoxy group, a silanol group, and an alkoxy group, in many cases using the methods silane coupling agents with industrial effectiveness have been limited to those having an epoxy group.

Other than these, Patent Document 8 discloses a method using a silane coupling agent having a succinic anhydride group or a hydrolyzable silane oligomer having at least one ureido group as an additive. Although the adhesiveness is improved by the effect of assisting the interaction between base material and release layer due to the succinic anhydride group, the ureido group, and the silicon-bonded alkoxy group, residual adhesion ratio, adhesiveness, and coatability of the ureido group-containing oligomer did not all reach a satisfactory level, and there was still room for improvement.

As described above, hardly any suggestions have been made for a silicone emulsion that can reach a satisfactory level in the residual adhesion rate, the adhesiveness, and the coatability when applied to paper or plastic film base material.

### CITATION LIST

### PATENT LITERATURE

Patent Document 1: JP H6-57144 A
Patent Document 2: JP H11-222557 A
Patent Document 3: JP 3824072 B
Patent Document 4: JP H7-57862 B
Patent Document 5: JP 6130230 B
Patent Document 6: JP 5074682 B
Patent Document 7: JP 2017-504674 A
Patent Document 8: JP 2020-070311 A

### SUMMARY OF INVENTION

### TECHNICAL PROBLEM

The present invention has been made to solve the above-described problems, and an object thereof is to provide: a silicone emulsion composition that provides a cured film having suitable release force and a high residual adhesion ratio against an adhesive, while having good coatability and good adhesiveness for paper or plastic film base material regardless of its type; and a release film wherein a cured film of the silicone emulsion composition is formed.

### SOLUTION TO PROBLEM

To achieve the object, the present invention provides an addition reaction-curable silicone emulsion composition comprising at least one ureide compound (I) selected from non-polymeric organic compounds having at least one ureide group per molecule, organopolysiloxane (II) having at least two alkenyl groups per molecule, and water,
wherein the addition reaction-curable silicone emulsion composition contains 1.0 part by mass or more of the ureide compound (I) and 100.0 parts by mass or more of the water (VI), based on 100.0 parts by mass of the organopolysiloxane (II).

The inventive addition reaction-curable silicone emulsion composition can give a cured film having suitable release force and a high residual adhesion ratio against an adhesive, while having good coatability and good adhesiveness for paper or plastic film base material regardless of its type.

The non-polymeric organic compounds are preferably one or more kinds of compounds selected from the group consisting of a silane coupling agent monomer, 1-methylurea, ethylurea, 1,1-dimethylurea, 1,1-diethylurea, acetylurea, 2-hydroxyethylurea, butylurea, 2-chloroethylurea, phenylurea, cyclohexylurea, p-tolylurea, o-tolylurea, and benzylurea.

This makes it possible to select non-polymeric organic compounds suitable for the present invention.

The silane coupling agent monomer is preferably represented by the following general formulae (Ia-1) and/or (Ia-2), 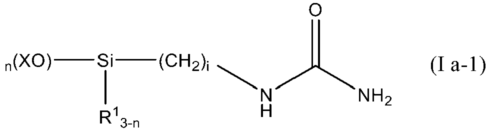 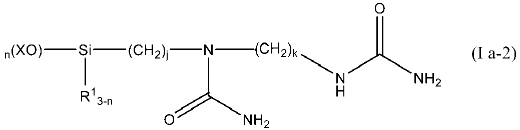 wherein R¹ represents a monovalent hydrocarbon group having 1 to 10 carbon atoms; "n" represents 2 or 3; "X" represents a monovalent hydrocarbon group having 1 to 4 carbon atoms or a hydrogen atom; and "i", "j", and "k" represent an integer of 2 to 20.

Such an addition reaction-curable silicone emulsion composition can give a cured film that has more improved adhesiveness to paper or plastic film base material.

The addition reaction-curable silicone emulsion composition preferably comprises:
1 to 15 parts by mass of the ureide compound (I);
100 parts by mass of the organopolysiloxane (II) represented by the following general formula (II-1) and having absolute viscosity at 25°C within a range of 10 mPa·s to 50,000 mPa·s with 30% toluene diluted viscosity,

   (R²₃Si-O_{1/2})ₚ (R²₂Si-O_{2/2})_{q} (R²Si-O_{3/2})ᵣ (Si-O_{4/2})ₛ (II-1)
wherein R²s may be the same or different to each other, each represent a group selected from the group consisting of unsubstituted or substituted monovalent hydrocarbon groups having 1 to 20 carbon atoms and not having aliphatic unsaturated bond and alkenyl groups having 2 to 12 carbon atoms and optionally having an intervening oxygen atom, at least two of the R²s are alkenyl groups, and it is within the range of 2≤p, 10≤q≤30,000, 0≤r, 0≤s, and 0≤r+s≤30;
1 to 30 parts by mass of an organohydrogenpolysiloxane (III) having at least two hydrogen atoms bonded directly to an Si atom per molecule;
0.1 to 20 parts by mass of a surfactant (IV) based on 100 parts by mass of a total amount of the organopolysiloxane (II) and the organohydrogenpolysiloxane (III);
a catalytic amount of a platinum group metal-based catalyst (V); and
100 to 10,000 parts by mass of water (VI).

Such an addition reaction-curable silicone emulsion composition can provide a cured film that adheres more feasibly to paper or plastic film base material and has excellent release properties against an adhesive.

Further, the present invention provides a release film wherein a cured film of the addition reaction-curable silicone emulsion composition above is formed on a paper or plastic film base material.

Such a release film has high practicality, since it forms a cured film, which has suitable release properties against adhesives while adhering well to paper or plastic film base material and therefore.

### ADVANTAGEOUS EFFECTS OF INVENTION

As described above, the inventive addition reaction-curable silicone emulsion composition, by curing, can be a cured film that can adhere well to base material regardless of the type of paper or plastic film base material. Furthermore, this cured film can be used for a release film since the cured film has suitable release properties against an adhesive. Furthermore, the release film obtained by applying the above-described silicone emulsion composition onto a paper or plastic film base material and by curing it has high practicability, since it forms a cured film, which has suitable release properties against adhesives and high residual adhesion ratio and adheres well, while having good coatability and good adhesiveness for a base material regardless of its type.

### DESCRIPTION OF EMBODIMENTS

As described, it has been desired to develop a silicone emulsion composition that provides a cured film having suitable release force and a high residual adhesion ratio against an adhesive, while having good coatability and good adhesiveness for paper or plastic film base material regardless of its type.

Accordingly, in order to solve the above problems, the present inventors have earnestly studied and found out that a silicone emulsion composition obtained by adding an ureide compound to an alkenyl group-containing organopolysiloxane adheres well to paper or plastic film base material, and have completed the present invention.

That is, the present invention is an addition reaction-curable silicone emulsion composition comprising at least one ureide compound (I) selected from non-polymeric organic compounds having at least one ureide group per molecule and organopolysiloxane (II) having at least two alkenyl groups per molecule,
wherein the addition reaction-curable silicone emulsion composition contains 1.0 part by mass or more of the ureide compound (I) and 100.0 parts by mass or more of the water (VI) based on 100 parts by mass of the organopolysiloxane (II).

Hereinafter, the present invention will be described in detail. However, the present invention is not limited thereto.

### [Silicone Emulsion Composition]

The inventive silicone emulsion composition is cured by addition reaction (addition reaction-curable), and includes one ureide compound (I), organopolysiloxane (II) having at least two alkenyl groups per molecule, and water (VI), wherein the inventive addition reaction-curable silicone emulsion composition contains 1.0 part by mass or more of the ureide compound (I) and 100.0 parts by mass or more of the water (VI) based on 100.0 parts by mass of the organopolysiloxane (II).

The inventive addition reaction-curable silicone emulsion composition contains the above-described ureide compound (I), and therefore, favorable adhesiveness can be achieved even with a paper or plastic film base material with which sufficient adhesiveness cannot be achieved by addition of a conventionally-used epoxy group-containing silane coupling agent. In addition, a cured film obtained by curing the inventive composition can achieve a sufficiently easy release (making it easy to be peeled off) from an adhesive and high residual adhesion ratio, while maintaining sufficient adhesiveness to plastic base material.

In addition to the above-described ureide compound (I) organopolysiloxane (II) having at least two alkenyl groups per molecule, the inventive addition reaction-curable silicone emulsion composition can contain an organohydrogenpolysiloxane (III) having at least two hydrogen atoms each directly bonded to a Si atom per molecule, a surfactant (IV), a catalytic amount of a platinum group metal-based catalyst (V), and water (VI). Hereinafter, each of the above-described components will be described in detail.

### [Ureide Compound (I)]

In the present invention, the ureide compound (I) is at least one kind of compound selected from non-polymeric organic compounds having at least one ureide group per molecule.

The ureide compound (I) has at least one ureide group, preferably more than one and not more than four.

The organic compound is preferably one or more kinds of compounds selected from silane coupling agent monomers, 1-methylurea, ethylurea, 1,1-dimethylurea, 1,1-diethylurea, acetylurea, 2-hydroxyethylurea, butylurea, 2-chloroethylurea, phenylurea, cyclohexylurea, p-tolylurea, o-tolylurea, and benzylurea, and more preferably 1-methylurea, ethylurea, and butylurea.

The silane coupling agent monomers include one or more kinds of compounds selected from silane coupling agent monomers having at least one ureido group per molecule.

The silane coupling agent monomers is preferably represented by the following general formulae (Ia-1) or (Ia-2).

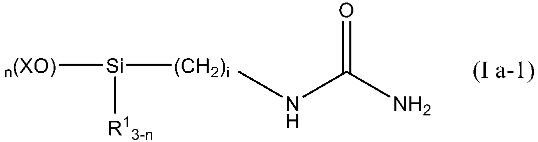

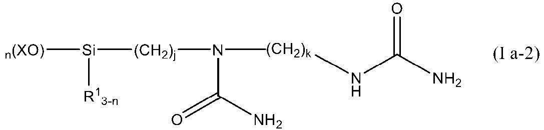

In the formula (Ia-1) and (Ia-2), R¹ represents a monovalent hydrocarbon group having 1 to 10, preferably 1 to 6 carbon atoms. Specific examples include: alkyl groups, such as a methyl group, an ethyl group, a propyl group, an isopropyl group, a butyl group, an isobutyl group, a tert-butyl group, a pentyl group, a neopentyl group, a hexyl group, and an octyl group; cycloalkyl groups, such as a cyclohexyl group; alkenyl groups, such as a vinyl group, an allyl group, and a propenyl group; aryl groups, such as a phenyl group, a tolyl group, a xylyl group, and a naphthyl group; and aralkyl groups, such as a benzyl group, a phenylethyl group, and a phenylpropyl group. Among these, a methyl group, an ethyl group, and a phenyl group are preferable. In addition, "n" represents 2 or 3, preferably 3. The silane coupling agent where "n" represents 2 or 3 is preferable because a sufficient amount of silanol is generated by hydrolysis so that the silane coupling agent can have high solubility in water, resulting in sufficient stability of the aqueous solution, and because reaction efficiency with inorganic materials is high.

"X" represents a monovalent hydrocarbon group having 1 to 4 carbon atoms or a hydrogen atom, and specific examples of the hydrocarbon group include alkyl groups, such as a methyl group, an ethyl group, a propyl group, an isopropyl group, a butyl group, an isobutyl group, and a tert-butyl group. Among these, a methyl group and an ethyl group are preferable.

In the formula (Ia-1) and (Ia-2), "I", "j", and "k" each represent an integer of 2 to 20, preferably an integer of 2 to 10, and it is more preferable that they satisfy i=3, J=3, and k=2 from an industrial viewpoint.

Specific examples of the ureido group-containing silane coupling agent monomer include the compounds shown below:
1-[3-(trimethoxysilyl)propyl]urea, 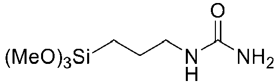
1-[3-(triethoxysilyl)propyl]urea, 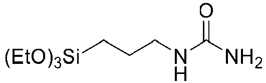
1-[3-(methyldimethoxysilyl)propyl]urea, 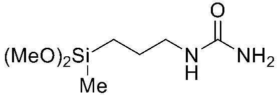
1-[3-(methyldiethoxysilyl)propyl]urea, 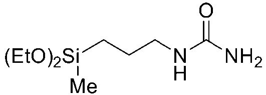
and N-(2-ureidoethyl)-3-ureidopropyltrimethoxysilane. 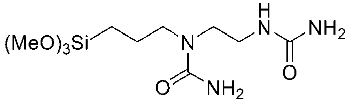 1-[3-(trimethoxysilyl)propyl]urea, 1-[3-(triethoxysilyl)propyl]urea, and N-(2-ureidoethyl)-3-ureidopropyltrimethoxysilane are preferable, and N-(2-ureidoethyl)-3-ureidopropyltrimethoxysilane is particularly preferable, but is not limited to the examples given here. (In the formulae, Me represents a methyl group, and Et represents an ethyl group.)

In addition, it is presumed that the above-mentioned silane coupling agent monomer is partially converted into a component which is a hydrolyzed structure or a condensed structure in water, and such a component is also considered to be effective in improving adhesiveness to a base material. 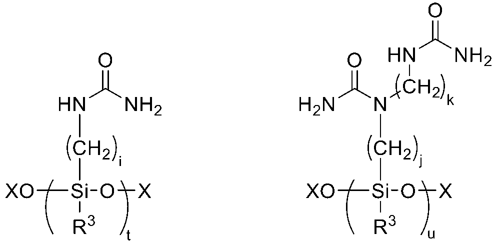 (As in the above formulae (Ia-1) and (Ia-2), "I", "j", and "k" are integers of 2 to 20, preferably 2 to 10. From an industrial viewpoint, it is more preferable that they satisfy i=3, j=3 and k=2. In the formulae, "X" is a monovalent hydrocarbon group having 1 to 4 carbon atoms or a hydrogen, "t" and "u" are integers of 1 to 50, and R³ is a monovalent hydrocarbon group having 1 to 10 carbon atoms or an -OX group.)

It is not entirely clear why the inventive addition reaction-curable silicone emulsion composition provides a cured film that adheres well to paper or plastic film base material regardless of the type of the base material, but it is thought that the ureido group exhibits affinity for a surface of the base material, and in the case of a silane coupling agent monomer, in particular, a silyl group bonds with a silicone layer, thereby improving adhesiveness.

In particular, the addition of the silane coupling agent monomer (Ia-1) or (Ia-2) is considered to improve adhesiveness to the base material because the ureido group exhibits strong affinity for the film surface and the alkoxysilyl group bonds with the silicone layer.

The inventive addition reaction-curable silicone emulsion composition contains 1 part by mass or more of the ureide compound (I) based on 100 parts by mass of the organopolysiloxane (II). When it is less than 1 part by mass, it is impossible to obtain a cured film having sufficient adhesiveness to paper or plastic film base material. On the other hand, the upper limit of the amount of ureido compound (I) to be blended may be set according to a base material and is not particularly limited, but is preferably 15 parts by mass or less, more preferably 10 parts by mass or less.

### [Alkenyl Group-Containing Organopolysiloxane (II)]

The alkenyl group-containing organopolysiloxane, being the main component of the inventive silicone emulsion composition, has at least two alkenyl groups per molecule, preferably three or more and 300 or less. The alkenyl group-containing organopolysiloxane is not particularly limited as far as an emulsion is obtained by emulsification and has at least two alkenyl groups per molecule. Curability might be reduced when the number of the alkenyl group is less than 2, and releasability of the cured film is preferable when the number is 300 or less.

In order to impart more desirable properties to a release film obtained by using the inventive silicone emulsion composition, it is preferable to use the organopolysiloxane represented by the following general formula (II-1).

(R²₃Si-O_{1/2})ₚ (R²₂Si-O_{2/2})_{q} (R²Si-O_{3/2})ᵣ (Si-O_{4/2})ₛ (II-1)

In the formula (II-1), R²s may be the same or different to each other, each represent a group selected from the group consisting of unsubstituted or substituted monovalent hydrocarbon groups having 1 to 20 carbon atoms and not having aliphatic unsaturated bond or alkenyl groups having 2 to 12 carbon atoms and optionally having an intervening oxygen atom, and at least two of the R²s are alkenyl groups.

Specific examples of the monovalent hydrocarbon group having 1 to 20 carbon atoms and not having aliphatic unsaturated bond include: alkyl groups preferably having 1 to 6 carbon atoms, such as a methyl group, an ethyl group, a propyl group, and a butyl group; cycloalkyl groups preferably having 5 to 8 carbon atoms, such as a cyclohexyl group; aryl groups preferably having 6 to 10 carbon atoms, such as a phenyl group and a tolyl group; aralkyl groups preferably having 7 to 10 carbon atoms, such as a benzyl group; and substituted hydrocarbon groups obtained by substituting some or all of the hydrogen atoms bonded to the carbon atom of these hydrocarbon groups with a hydroxy group, an alkoxy group, a polyether group, an alkoxyalkyl group, an epoxy group, a halogen atom, or the like (for example, a hydroxypropyl group, a chloropropyl group, a 3,3,3-trifluoropropyl group, and the like). In particular, from the viewpoint of release properties, alkyl groups and aryl groups are preferable, and a methyl group, an ethyl group, a propyl group, and a phenyl group are more preferable.

As the alkenyl group having 2 to 12 carbon atoms and optionally having an intervening oxygen atom, a group represented by -(CH₂)ₓ-CH=CH₂, wherein "x" represents 0 or an integer of 1 to 10, is preferable. Specific examples include a vinyl group, a propenyl group, a butenyl group, a hexenyl group, an octenyl group, and a decenyl group. In addition, the methylene chain thereof may contain an ether bond, and the position where the oxygen atom intervenes, i.e. the position of the ether bond, is not particularly limited. Examples include -(CH₂)₂-O-CH₂-CH=CH₂, -(CH₂)₃-O-CH₂-CH=CH₂, and the like. Among them, in particular, a vinyl group is preferable.

In addition, the viscosity of the organopolysiloxane (II-1) is preferably within a range from 10 mPa·s to 50,000 mPa·s with 30% toluene diluted viscosity in terms of absolute viscosity at 25°C, more preferably within a range from 50 mPa·s to 30,000 mPa·s with 30% toluene diluted viscosity. When the absolute viscosity is 10 mPa·s or higher, storage stability of the silicone emulsion composition becomes high, and when the absolute viscosity is 50,000 mPa·s or lower with 30% toluene diluted viscosity, emulsification becomes easy.

In the present invention, the viscosity of component (II) is a value measured with a BM type viscometer (for example, manufactured by Tokyo Keiki Co., Ltd.). The rotor, rotation speed, and rotation time are selected appropriately in consideration of the viscosity level in accordance with conventional methods.

The 30% toluene dilution viscosity is the value measured with the above-mentioned viscosity measurement after adding 30 g of organopolysiloxane to 70 g of toluene, mixing them, and stirring until the organopolysiloxane is dissolved.

"p" satisfies 2≤p, preferably 2≤p≤20, "q" satisfies 0≤q≤30,000, preferably 100≤q≤10,000, and "r" and "s" satisfy being in the ranges of 0≤r, 0≤s, and 0≤r+s≤30, preferably 1≤r, 0≤s, and 1≤r+s≤20; and these may be selected so that the viscosity of the organopolysiloxane (II-1) is within the above-described viscosity range. When r+s of organopolysiloxane is 30 or less, the organopolysiloxane (II-1) can be obtained without gelation during synthesis.

The inventive organopolysiloxane (II) can be obtained by known methods for manufacturing an organopolysiloxane. For example, a trialkoxymethylsilane and a dialkenyltetramethyldisiloxane or a hexamethyldisiloxane are co-hydrolyzed in an alcohol solvent by using an acid catalyst. Examples of the acid catalyst include sulfuric acid, hydrochloric acid, phosphoric acid, activated clay, iron chloride, boric acid, trifluoroacetic acid, methanesulfonic acid, and trifluoromethanesulfonic acid. The target organopolysiloxane can be obtained by, after neutralizing the reaction product, going through the steps of removing the by-product alcohol, washing with water, and removing unreacted materials. An alkali catalyst can be also employed as the catalyst. Alkali catalysts include KOH, CsOH, NaOH, (CH₃)₄NOH, (n-C₄H₉)₄POH, and metal siliconates of potassium, phosphorous, and the like.

Among the components of the inventive silicone emulsion composition, organopolysiloxane (II) is a component that greatly affects the release force. By changing a structure and a substituent of the organopolysiloxane (II), the release properties of a cured film of the silicone emulsion composition can be varied.

The organopolysiloxane (II) does not need to be of a single composition. For example, in the case of an organopolysiloxane (II-1), a mixture of a few organopolysiloxanes having different compositions can be used as long as the average of the multiple components fulfills the requirements of the above-described general formula. Specific examples of the organopolysiloxane (II) include the following, but are not limited thereto. Incidentally, Me, Vi, and Ph in the following formulae represent a methyl group, a vinyl group, and a phenyl group respectively. 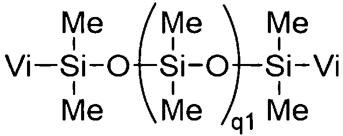 (50≤q1≤2,500) 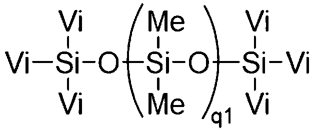 (50≤q1≤10,000) 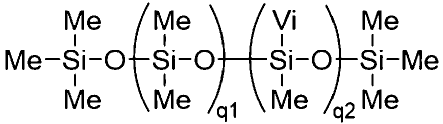 (50≤q1≤19,000, and 2≤q2≤500) 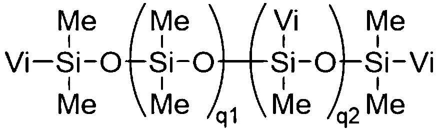 (50≤q1≤19,000, and 1≤q2≤500) 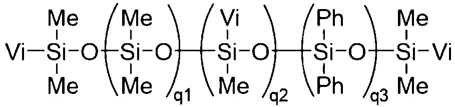 (50≤q1≤19,000, 1≤q2≤500, and 1≤q3≤500) 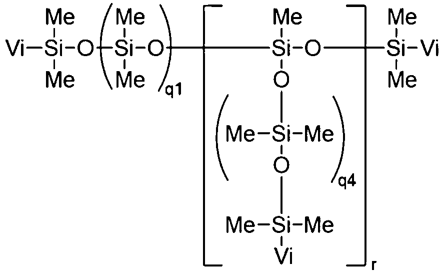 (50≤q1≤10,000, 0≤q4≤500, and 1≤r≤20) 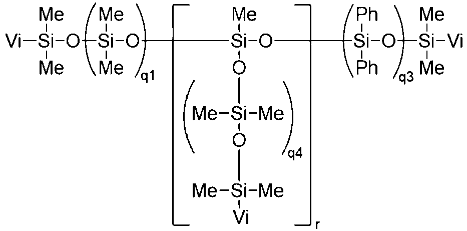 (50≤q1≤5,000, 1≤q3≤500, 0≤q4≤500, and 1≤r≤20) 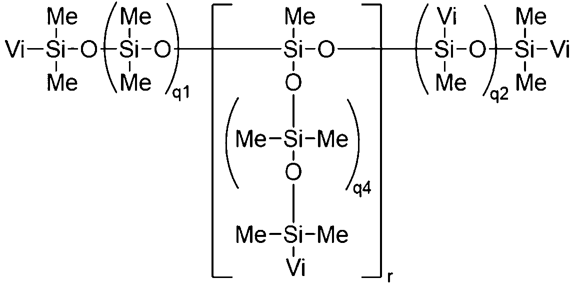 (50≤q1≤5,000, 1≤q2≤500, 0≤q4≤500, and 1≤r≤20) 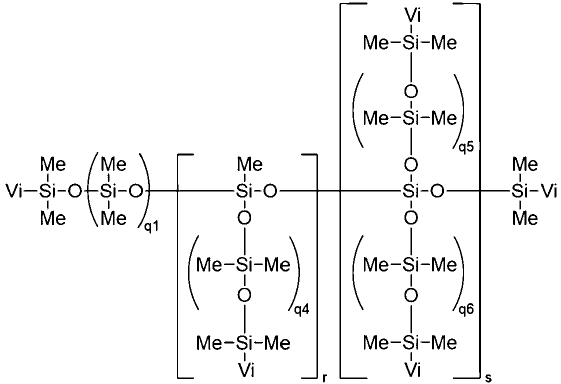 (50≤q1≤10,000, 0≤q4≤500, 0≤q5≤500, 0≤q6≤500, 1≤r and/or s, and 1≤r+s≤20) 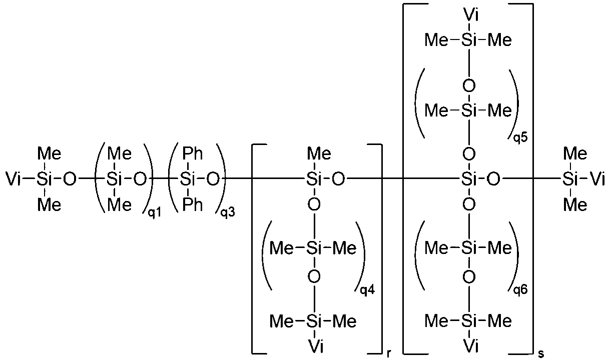 (200≤q1≤10,000, 1≤q3≤500, 0≤q4≤500, 0≤q5≤500, 0≤q6≤500, 1≤r and/or s, and 1≤r+s≤20) 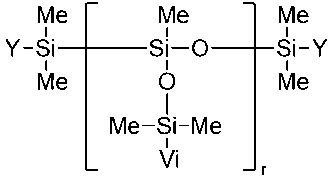 (1≤r≤20, "Y" represents a group selected from a methyl group, a methoxy group and a vinyl group, or an oxygen atom which gives a cyclic structure.)

### [Organohydrogenpolysiloxane (III)]

The inventive addition reaction-curable silicone emulsion composition may contain an organohydrogenpolysiloxane (III). The organohydrogenpolysiloxane (III) has at least two hydrogen atoms bonded directly to a Si atom (SiH groups) per molecule. This SiH group undergoes addition reaction with an alkenyl group of the organopolysiloxane (II) and functions as a crosslinking agent for forming a cured film. Two or more SiH groups are contained in one molecule, and the structure of a siloxane unit having the groups is represented by the following formula.

R⁴ₐH_{b}SiO_{(4-a-b)/2} (III)

In the formula (III), R⁴ represents an unsubstituted or substituted monovalent hydrocarbon group, and specific examples include: alkyl groups preferably having 1 to 6 carbon atoms, such as a methyl group, an ethyl group, a propyl group, and a butyl group; cycloalkyl groups preferably having 5 to 8 carbon atoms, such as a cyclohexyl group; halogen-substituted alkyl groups, such as a 3,3,3-trifluoropropyl group; aryl groups preferably having 6 to 10 carbon atoms, such as a phenyl group and a tolyl group; aralkyl groups preferably having 7 to 10 carbon atoms, such as a benzyl group; and a hydroxypropyl group, a cyanoethyl group, a 3-chloropropyl group, a 3,3,3-trifluoropropyl group, or the like, in which some or all of the hydrogen atoms bonded to the carbon atoms of the above groups are substituted with a hydroxy group, a cyano group, a halogen atom, or the like. Among these, alkyl groups and aryl groups are preferable, and, a methyl group is more preferable from the viewpoint of enhancing addition reaction rate. "a" and "b" are integers that satisfy 0≤a≤3, 0≤b≤3, and a+b≤3.

The SiH group content in one molecule of organohydrogenpolysiloxane (III) may be preferably at least 2, more preferably 3 to 300, further preferably 4 to 200, and even further preferably 5 to 100. When it is 2 or more, curability is obtained, when it is 3 or more, good curability is obtained, and when it is 300 or less, an appropriate release force can be obtained.

The organohydrogenpolysiloxane (III) preferably has a viscosity of 1 Pa·s or less, and more preferably 0.005 to 1 Pa·s, at 25°C. When the viscosity is 1 Pa·s or less, an emulsion composition can be easily obtained.

The blending amount of organohydrogenpolysiloxane (III) is adjusted according to the amount of alkenyl groups contained in the organopolysiloxane (II), and the molar ratio of SiH groups to alkenyl groups (H/Vi ratio) is preferably within the range of 0.40 to 11.0, more preferably within the range of 1.0 to 5.0. Considering formation of a cured film and release properties thereof, the blending amount of the organohydrogenpolysiloxane (III) may be set within the range of 1 to 30 parts by mass relative to the organopolysiloxane (II). When the blending amount is 1 part by mass or more, curability is enhanced, and when the blending amount is 30 parts by mass or less, release force does not exceed practical limits. The range of 2 to 15 parts by mass is more preferable.

Specific examples of the structure of the organohydrogenpolysiloxane (III) include those represented by the following formula. 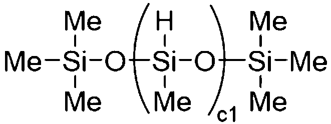 (3≤c1≤300) 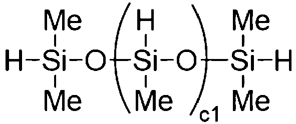 (1≤c2≤298) 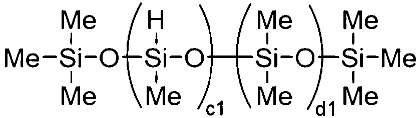 (3≤c3≤300, and 1≤d1≤500) 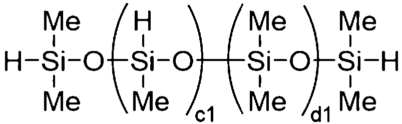 (1≤c3≤298, and 1≤d1≤500) 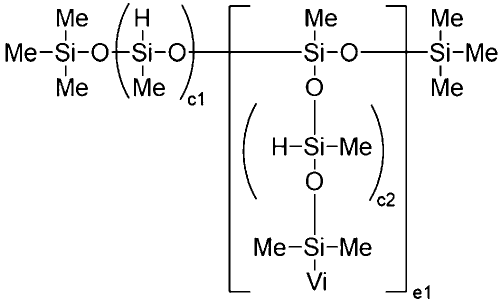 (0≤c3≤100, 0≤c2≤100, and 1≤e1≤50) 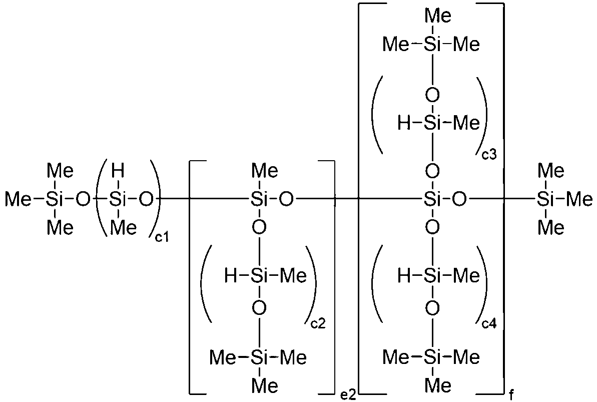 (0≤c3≤100, 0≤c2≤100, 0≤c3≤100, 0≤c4≤100, 1≤e2≤50, and 1≤f≤50)

### [Surfactant (IV)]

The inventive addition reaction-curable silicone emulsion composition may contain a surfactant (IV). Examples of the surfactant (IV) of the present invention include nonionic types, such as polyoxyethylene alkyl ethers, polyoxyethylene polyoxypropylene alkyl ethers, polyoxyethylene alkyl phenyl ethers, polyoxyethylene styrenated phenyl ethers, polyethylene glycol fatty acid esters, sorbitan fatty acid esters, polyoxyethylene sorbitan fatty acid esters, polyoxyethylene sorbit fatty acid esters, glycerin fatty acid esters, polyoxyethylene glycerin fatty acid esters, polyglycerin fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkylamines, polyoxyethylene fatty acid amides, polyoxyethylene modified organopolysiloxanes, and polyoxyethylene polyoxypropylene modified organopolysiloxanes. Polyoxyethylene alkyl ether, polyoxyethylene styrenated phenyl ether are preferable. One of these nonionic emulsifiers can be used or two or more kinds thereof may be used in combination. In order to obtain a stable silicone emulsion composition, a nonionic emulsifier or a mixture thereof has preferably an HLV value of 10 to 15.

In addition, an anionic surfactant or a cationic surfactant can also be used, but it is desirable to use together with a nonionic surfactant from the aspects of stability of the silicone emulsion and wettability to a base material. Examples of the anionic surfactant include alkyl sulfate ester salts, such as sodium lauryl sulfate, polyoxyethylene alkyl ether sulfates, polyoxyethylene alkyl phenyl ether sulfates, alkyl benzene sulfonates, polyoxyethylene alkyl phenyl ether sulfonates, alkyl diphenyl ether disulfonates, alkanesulfonates, N-acyltaurates, dialkyl sulfosuccinates, monoalkyl sulfosuccinates, polyoxyethylene alkyl ether sulfosuccinates, fatty acid salts, polyoxyethylene alkyl ether carboxylates, N-acyl amino acid salts, monoalkyl phosphate salts, dialkyl phosphate salts, and polyoxyethylene alkyl ether phosphate salts. Examples of the cationic surfactant include alkyltrimethylammonium salts, dialkyldimethylammonium salts, polyoxyethylenealkyldimethylammonium salts, dipolyoxyethylenealkylmethylammonium salts, tripolyoxyethylenealkylammonium salts, alkylbenzyldimethylammonium salts, alkylpyridinium salts, monoalkylamine salts, and monoalkylamidoamine salts.

It is desirable for the blending amount of the surfactant to be the minimum amount at which sufficient stability of a silicone emulsion and wettability to a base material can be obtained. Specifically, the blending amount is preferably 0.1 to 20 parts by mass based on 100 parts by mass of the total amount of the organopolysiloxane (II) and the organohydrogenpolysiloxane (III), more preferably 0.5 to 15 parts by mass. When the amount is 0.1 mass or more, emulsification becomes easy, and when the amount is 20 parts by mass or less, the curability of the silicone emulsion is enhanced.

As one exhibiting the same function as a surfactant, water-soluble resin can be used alone or along with the surfactant. Examples of the water-soluble resin include polyvinyl alcohol, cellulose derivatives, and carboxyvinyl polymers, and a polyvinyl alcohol is more preferable. This water-soluble resin may function as a thickener. It is preferable to select one having a minimal poisoning action to the platinum group metal-based catalyst (V). Like the surfactant, it is desirable for the blending amount to be the minimum amount at which sufficient stability of the silicone emulsion and sufficient wettability to base materials can be achieved. Specifically, the amount is preferably 1 to 10 parts by mass, more preferably 3 to 8 parts by mass based on 100 parts by mass of the total amount of the organopolysiloxane (II) and the organohydrogenpolysiloxane (III).

### [Platinum group metal-based Catalyst (V)]

The inventive addition reaction-curable silicone emulsion composition may contain a platinum group metal-based catalyst (V). The platinum group metal-based catalyst (V) is a catalyst for promoting addition reaction, and it is possible to use a publicly known addition reaction catalyst. Examples of such a platinum group metal-based catalyst include platinum-based, palladium-based, rhodium-based, and ruthenium-based catalysts. Among these, in particular, platinum-based catalysts are preferably used. Examples of the platinum-based catalyst include chloroplatinic acid, an alcohol solution or aldehyde solution of chloroplatinic acid, and complexes of platinum with olefins or alkenylsiloxanes.

Such a platinum group metal-based catalyst is added in a catalytic amount, and from the standpoints of obtaining a favorable cured film and economy, the amount of platinum group metal is preferably within the range of 1 to 1,000 ppm based on the total mass of the organopolysiloxane (II) and the organohydrogenpolysiloxane (III). When it is 1,000 ppm or less, the usable time of the treatment bath can be maintained long. When it is in the range of 5 to 500 ppm, it is more preferable.

### [Water (VI)]

The inventive addition reaction-curable silicone emulsion composition contains water (VI). The amount of the water (VI) is adjusted so as provide a viscosity suitable for the application apparatus to be actually used and a desired silicone coating amount on a base material. The amount is 100.0 parts by mass or more, more preferably 100.0 to 10,000 parts by mass based on 100.0 parts by mass of the organopolysiloxane (II). When the amount is 100.0 parts by mass or more, an O/W-type emulsion can be easily obtained, and when the amount is 10,000 parts by mass or less, stability of the emulsion can be maintained. When it is 1,000 to 5,000 parts by mass, it is further preferable.

Water having an impurity concentration as in tap water may be used sufficiently, and it is preferable that water does not contain strong acid, strong alkali, a large amount of alcohol, or salts, or the like since stability of the emulsion can be maintained.

### [Other Components]

Besides the above-described components, the inventive addition reaction-curable silicone emulsion composition may contain optional components. Examples of the optional components include a catalysis inhibitor (controller) for inhibiting the catalytic activity of a platinum group metal-based catalyst, which is selected from organic nitrogen compounds, organic phosphorus compounds, acetylene-based compounds, oxime compounds, and the like. Examples thereof include: acetylene-based alcohols, such as 3-methyl-1-butyne-3-ol, 3,5-dimethyl-1-hexyne-3-ol, 3-methyl-1-pentyne-3-ol, and 2-Phenyl-3-butyn-2-ol; acetylene-based compounds, such as 3-methyl-3-penten-1-yne and 3,5-dimethyl-1-hexyne-3-yne; a reaction product of these acetylene-based compounds with an alkoxysilane, a siloxane, or a hydrogensilane; vinylsiloxanes, such as a cyclic tetramethylvinylsiloxane; organic nitrogen compounds, such as benzotriazole; other organic phosphorus compounds; oxime compounds; and compounds having multiple unsaturated groups, such as diallyl maleate.

In addition, in order to control release properties, it is possible to add silicone resins, silica, or organopolysiloxanes having no hydrogen atom or alkenyl group bonded to silicon atoms; and leveling agents, such as fluorine-based surfactant, as necessary. It should be noted that the adding amounts of the optional components may be set according to necessity.

### [Method for Manufacturing Silicone Emulsion Composition]

Publicly known methods can be employed for manufacturing the inventive addition reaction-curable silicone emulsion composition. For example, It is preferable to: mix predetermined amounts of the components (I) to (IV) and a portion of water (VI) or predetermined amounts of the components (IV) to (V) and a portion of water (VI) by using a high-shear agitating apparatus, such as a planetary mixer, a combination mixer, or a high-pressure homogenizer; emulsify the mixture by phase inversion method; and dilute the mixture by adding the remaining portion of the water (VI). One kind of each component can be used or two or more kinds of each component can be used in combination.

The ureide compound can be added by various methods, such as a method of adding it to an emulsion solution containing the (II) to (VI) above; a method of adding it to an aqueous solution after adding water to an emulsion solution; a self-emulsifying formulation; and a method of blending it as a starting material when manufacturing an emulsion solution containing the above (II) to (IV). The self-emulsifying formulation is a formulation in which a ureido compound and a surfactant are mixed in advance and the mixed solution is added to an emulsion solution, thereby dispersing the compounds in the emulsion solution without separation.

It is desirable that the platinum group metal-based catalyst (V) is added after forming an emulsion of the (I) to (IV) above and immediately before using this emulsion, without emulsifying the platinum group metal-based catalyst (V) with the other components at the same time. The platinum group metal-based catalyst is preferably processed into a water dispersible form prior to being added. For example, effective methods include self-emulsifying formulation by being mixed with a surfactant (IV) in advance and a method of preparing an emulsion together by the above-described method.

### [Release Paper or Release Film]

The silicone emulsion composition thus prepared is applied onto a paper or plastic film base material, and can be used as a release film by thermally curing.

Examples of the paper film base material include glassine paper, polyethylene laminated paper, woodfree paper, kraft paper, clay-coated paper, and cast-coated paper. Examples of the plastic film include: polyolefin films, such as biaxially-oriented polypropylene film, polyethylene film, and ethylene-propylene copolymer film; and polyester films, such as polyethylene terephthalate. The thickness of these film base materials is not restricted, but usually, those having a thickness of about 5 to 100 µm can be used.

In order to apply the inventive composition onto a base material, it is possible to use a gravure coater, an air knife coater, a roll coater, a wire bar coater, or the like. The amount to be applied is not particularly restricted, but may be usually about 0.05 to 2.0 g/m² in terms of silicone solid, and is preferably 0.1 to 1.0 g/m².

After applying the inventive composition, the applied base material is thermally cured at 80°C to 160°C, for example, in a circulating hot air dryer. The higher the temperature, the shorter the curing time. For example, by heating at 80°C for 3 minutes or at 160°C for about 5 seconds, a cured film of silicone is formed on the base material, while imparting release properties. The film may be cured by irradiation with infrared or ultraviolet radiation. Using these techniques in combination can decrease temperature and reduce the time in thermally curing, thereby improving curing efficiency.

As described, the inventive addition reaction-curable silicone emulsion composition can form a cured film that can adhere well to a base material regardless of the type of the paper or plastic film base material. Further, this cured film can be used for a release film since the cured film has suitable release properties against adhesives. Moreover, a cured film of silicone can be formed on the base material by, after applying the inventive composition, heating the applied base material at 80°C to 160°C for about 5 seconds to 3 minutes. Therefore, a release film imparted with release properties can be manufactured easily without using an expensive apparatus, and without going through a complicated process.

### EXAMPLE

Hereinafter, the present invention will be specifically described with reference to Examples and Comparative Examples. However, the present invention is not limited thereto.

Next, Examples and Comparative Examples of the present invention will be given. In the Examples, the physical properties in the tables are measured by the test methods described below. In addition, viscosity means absolute viscosity unless otherwise indicated.

### [Coatability]

When, immediately after preparation of a silicone emulsion composition, the prepared silicone emulsion composition was applied onto a 38 µm PET base material so as to achieve 0.25 g/m² in terms of a solid component, the applied emulsion composition was visually observed and evaluated whether or not the emulsion composition was uniformly applied onto the base material as coatability.

### [Adhesiveness]

Immediately after preparation of a silicone emulsion composition, the prepared silicone emulsion composition was applied onto a 38 µm PET base material so as to achieve 0.25 g/m² in terms of a solid component, and heated in a hot air dryer at 150°C for 30 seconds to form a cured film. The formed cured film was rubbed 10 times with a finger, visually observed whether or not it was smeared and rubbed off, and the observation was evaluated as adhesiveness.

### [Release Force]

Immediately after preparation of a silicone emulsion composition, the prepared silicone emulsion composition was cured at 150°C for 30 seconds by the same method as the coatability test and the adhesiveness test and allowed to stand at 25°C for 24 hours. An adhesive tape (Tesa 7475 tape, product name manufactured by Tesa Tape. Inc.) with a width of 25 mm was attached thereto, and aged at 25°C for 20 hours with applying a load of 70 g/cm². Then, the adhesive tape attached to the sample was peeled using a tensile tester at an angle of 180° at a rate of 0.3 m/min. The force (N) required to peel off the tape having a width of 25 mm was measured.

### [Residual Adhesion Ratio]

A cured film of a silicone emulsion composition was formed in the same manner as with the release force. A polyester adhesive tape (Nitto 31B, product name manufactured by Nitto Denko Co., Ltd.) was attached to the surface of the cured film, and the cured film was heated at 70°C for 20 hours with applying a load of 20 g/cm². Thereafter, the tape was removed and attached to a stainless steel plate, and subsequently, the force A (N) required to peel off the treated tape having a width of 25 mm from the stainless steel plate was measured.

A polyester adhesive tape with no treatment was prepared separately as a standard tape, the force B (N) required to peel off the standard tape from the stainless steel plate was measured in the same manner. A percentage of the force A to the force B was defined as residual adhesion ratio.

### [Preparation of Emulsion Composition]

### [Silicone Emulsion 1]

A 5-liter combined emulsifier apparatus (TK combi mix Model M, PRIMIX Corporation) equipped with an anchor-type stirrer capable of stirring a whole space of the vessel and with a rotatable disk having small serrated protrusions upward and downward alternatively along the periphery was charged with: 100 parts by mass of siloxane (IIa) composed of 1.9 mol% of a dimethylvinylsiloxane unit represented by (CH₃)₂(CH₂=CH)SiO_{1/2}, 97.5 mol% of a dimethylsiloxane unit represented by (CH₃)₂SiO_{2/2}, and 0.6 mol% of a methylsiloxane unit represented by CH₃SiO_{3/2}, and having a viscosity of 252 mPa·s and a vinyl group content of 0.027 mol/100 g as an organopolysiloxane (II); 3.58 parts by mass of methylhydrogenpolysiloxane (IIIa) composed of 2 mol% of a trimethylsiloxane unit represented by (CH₃)₃SiO_{1/2}, 28 mol% of a dimethylsiloxane unit represented by (CH₃)₂SiO_{2/2}, and 70 mol% of a methylhydrogensiloxane unit represented by (CH₃)HSiO_{2/2}, and having a viscosity of 122.2 mPa·s and an Si-H group content of 1.080 mol/100 g, as organohydrogenpolysiloxane (III); 0.78 parts by mass of a polyoxyethylene lauryl ether (Iva, HLB of 13.6) as a surfactant (IV); 51.95 parts by mass of a 10% polyvinyl alcohol aqueous solution (Iva-1) as a water-soluble resin (thickener); and 0.39 parts by mass of ethynyl cyclohexanol as a catalysis inhibitor. The mixture was stirred and mixed uniformly, and phase inversion was induced, followed by another 15 minutes of stirring. Subsequently, 103.04 parts of water (VI) was added thereto as a water diluent and stirred to obtain an O/W type emulsion 1 having a silicone content of 40%.

### [Silicone Emulsion 2]

A 5-liter combined emulsifier apparatus (TK combi mix Model M, PRIMIX Corporation) equipped with an anchor-type stirrer capable of stirring a whole space of the vessel and with a rotatable disk having small serrated protrusions upward and downward alternatively along the periphery was charged with: 100 parts by mass of siloxane (IIa) composed of 1.3 mol% of a dimethylvinylsiloxane unit represented by (CH₃)₂(CH₂=CH)SiO_{1/2}, and 98.7 mol% of a dimethylsiloxane unit represented by (CH₃)₂SiO_{2/2}, and having a viscosity of 386 mPa·s and a vinyl group content of 0.018 mol/100 g as an organopolysiloxane (II); 2.26 parts by mass of methylhydrogenpolysiloxane (IIIa) composed of 2 mol% of a trimethylsiloxane unit represented by (CH₃)₃SiO_{1/2}, 28 mol% of a dimethylsiloxane unit represented by (CH₃)₂SiO_{2/2}, and 70 mol% of a methylhydrogensiloxane unit represented by (CH₃)HSiO_{2/2}, and having a viscosity of 122.2 mPa·s and an Si-H group content of 1.080 mol/100 g, as an organohydrogenpolysiloxane (III); 0.78 parts by mass of polyoxyethylene lauryl ether (Iva, HLB of 13.6) as a surfactant (IV); 51.95 parts by mass of a 10% polyvinyl alcohol aqueous solution (Iva-1) as a water-soluble resin (thickener); and 0.21 parts by mass of ethynyl cyclohexanol as a catalysis inhibitor. The mixture was stirred and mixed uniformly, and phase inversion was induced, followed by another 15 minutes of stirring. Subsequently, 102.52 parts of water (VI) was added thereto as a water diluent and stirred to obtain an O/W type emulsion 2 having a silicone content of 40%.

### [Platinum Catalyst Emulsion 3]

20 parts by mass of a dispersion in which addition reaction-active platinum vinylsiloxane complex (V) was dispersed in a vinyl group-containing organopolysiloxane, 0.2 parts by mass of a surfactant (IV), and 1.0 part by mass of a water-soluble resin were charged. Then, the mixture was stirred and mixed uniformly, and phase inversion was induced, followed by another 20 minutes of stirring. Subsequently, 67.9 parts of water (VI) was added thereto as a water diluent and stirred to obtain an O/W type platinum catalyst emulsion 3 having a platinum concentration of 1000 ppm.

### [Synthesis Example 1] Synthesis of silane coupling agent (Ib)

A 300-mL separable flask equipped with a stirrer, a reflux condenser, and a thermometer was charged with 148.3g (0.83mol) of 3-aminopropyltrimethoxysilane and 51.7g (0.86mol) of urea, and the mixture was heated at 120°C. Ammonia generated by the reaction was distilled off under reduced pressure to obtain a silane coupling agent (Ib).

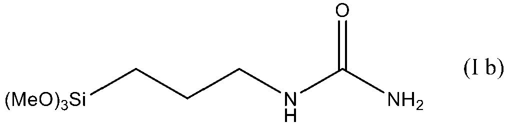

### [Synthesis Example 2] Synthesis of silane coupling agent (Ic)

A 300-mL separable flask equipped with a stirrer, a reflux condenser, and a thermometer was charged with 128.9 g (0.58 mol) of 3-(2-aminoethylamino)propyltrimethoxysilane and 71.1 g (1.2 mol) of urea, and the mixture was heated at 130°C. Ammonia generated by the reaction was distilled off under reduced pressure and added with 180 g of methanol to obtain a 50% solution of a silane coupling agent (Ic).

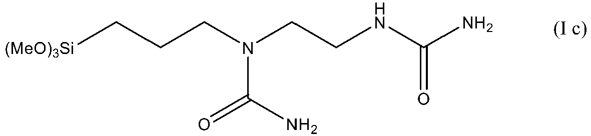

### [Synthesis Example 3] Synthesis of silane coupling agent (f)

A 500-mL separable flask equipped with a stirrer, a reflux condenser, and a thermometer was charged with 300 g of water, 55.3 g of 3-aminopropyltriethoxysilane, and 132 g of a 50 mass% methanol solution of 3-ureidopropyltriethoxysilane, and the mixture was heated at 120°C. The mixture of methanol, ethanol and water generated by hydrolysis was distilled off under reduced pressure to obtain a silane coupling agent oligomer (f) having a ureido group and an amino group.

### [Synthesis Example 4] Synthesis of silane coupling agent (g)

A 500-mL separable flask equipped with a stirrer, a reflux condenser, an ester adapter, and a thermometer was charged with 1.83 g of water, 82 g of methanol, 155 g of 3-epoxypropyltrimethoxysilane, and 145 g of 3-ureidopropyltrimethoxysilane, and the mixture was heated at 120°C. The mixture of methanol and water generated by hydrolysis was distilled off under reduced pressure to obtain a silane coupling agent oligomer (g) having a ureido group and an epoxy group.

### <Example 1>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of a silane coupling agent (Ib) was blended therewith and the mixture was thoroughly mixed. The resultant was used as a silicone emulsion composition, and measured for coatability, adhesiveness, release force, and residual adhesion ratio. The results are shown in Table 3.

### <Example 2>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 10.0 parts by mass of a silane coupling agent (Ib) was blended therewith and the mixture was thoroughly mixed. The resultant was used as a silicone emulsion composition, and measured for coatability, adhesiveness, release force, and residual adhesion ratio. The results are shown in Table 3.

### <Example 3>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 15.0 parts by mass of a silane coupling agent (Ib) was blended therewith and the mixture was thoroughly mixed. The resultant was used as a silicone emulsion composition, and measured for coatability, adhesiveness, release force, and residual adhesion ratio. The results are shown in Table 3.

### <Example 4>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of a silane coupling agent (Ic) was blended therewith and the mixture was thoroughly mixed. The resultant was used as a silicone emulsion composition, and measured for coatability, adhesiveness, release force, and residual adhesion ratio. The results are shown in Table 3.

### <Example 5>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 10.0 parts by mass of a silane coupling agent (Ic) was blended therewith and the mixture was thoroughly mixed. The resultant was used as a silicone emulsion composition, and measured for coatability, adhesiveness, release force, and residual adhesion ratio. The results are shown in Table 3.

### <Example 6>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of the following 1-Methylurea (Id) was blended therewith and the mixture was thoroughly mixed. The resultant was used as a silicone emulsion composition, and measured for coatability, adhesiveness, release force, and residual adhesion ratio. The results are shown in Table 3.

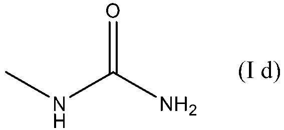

### <Example 7>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 10.0 parts by mass of an ureide compound (Id) was blended therewith and the mixture was thoroughly mixed. The resultant was used as a silicone emulsion composition, and measured for coatability, adhesiveness, release force, and residual adhesion ratio. The results are shown in Table 3.

### <Example 8>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of butyl urea (Ie) was blended therewith and the mixture was thoroughly mixed. The resultant was used as a silicone emulsion composition, and measured for coatability, adhesiveness, release force, and residual adhesion ratio. The results are shown in Table 4.

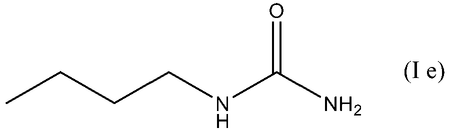

### <Example 9>

256 parts by mass of the silicone emulsion 2 (total amount of organopolysiloxane: 100 parts by mass) was diluted with 1023 parts by mass of water (VI), and the platinum catalyst emulsion 3 was added thereto so that platinum mass is 150 ppm of the total mass of the silicone content in the silicone emulsion 1. 1.9 parts by mass of a silane coupling agent (Ib) was blended therewith and the mixture was thoroughly mixed. The resultant was used as a silicone emulsion composition, and measured for coatability, adhesiveness, release force, and residual adhesion ratio. The results are shown in Table 4.

### <Comparative Example 1>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. The mixture mixed thoroughly was used as a silicone emulsion composition, and measured for coatability, adhesiveness, release force, and residual adhesion ratio. The results are shown in Table 4.

### <Comparative Example 2>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of a silane coupling agent (f) was blended therewith and the mixture was thoroughly mixed. The resultant was used as a silicone emulsion composition, and measured for coatability, adhesiveness, release force, and residual adhesion ratio. The results are shown in Table 4.

### <Comparative Example 3>

259 parts by mass of the silicone emulsion 1 (total amount of organopolysiloxane: 100 parts by mass) was diluted with 1813 parts by mass of water (VI), and the platinum catalyst emulsion 3 was added thereto so that platinum mass is 150 ppm of the total mass of the silicone content in the silicone emulsion 1. 5.0 parts by mass of a silane coupling agent (g) was blended therewith and the mixture was thoroughly mixed. The resultant was used as a silicone emulsion composition, and measured for coatability, adhesiveness, release force, and residual adhesion ratio. The results are shown in Table 4.

**[Table 1]**

| Components | Example 1 | | Example 2 | Example 3 | Example 4 | Example 5 | Example 6 | Example 7 |
|---|---|---|---|---|---|---|---|---|
| Organopolysiloxane (II) | 100 | | 100 | 100 | 100 | 100 | 100 | 100 |
| Ureide compound (I) | (Ib) 5 | | (Ib) 10 | (Ib) 15 | (Ic) 5 | (Ic) 10 | (Id) 5 | (Id) 10 |
| Organohydrogenpolysiloxane (III) | 3.58 | | 3.58 | 3.58 | 3.58 | 3.58 | 3.58 | 3.58 |
| Surfactant (IV) (Note 1) | 0.75 | | 0.75 | 0.75 | 0.75 | 0.75 | 0.75 | 0.75 |
| Platinum group metal-based catalyst (V) (Note 2) | 150 | | 150 | 150 | 150 | 150 | 150 | 150 |
| Water (VI) | 1962 | | 1962 | 1962 | 1962 | 1962 | 1962 | 1962 |
| Water-soluble resin polyvinyl alcohol (Note 1) | 5.02 | | 5.02 | 5.02 | 5.02 | 5.02 | 5.02 | 5.02 |
| Ethynyl cyclohexanol | 0.39 | | 0.39 | 0.39 | 0.39 | 0.39 | 0.39 | 0.39 |

| | | | | | | | | |
|---|---|---|---|---|---|---|---|---|
| Note 1: parts by mass based on 100 parts by mass of "(II)+(III)" Note 2: concentration (ppm) in terms of the mass of the platinum relative to the mass of "(II)+(III)" | | | | | | | | |

**[Table 2]**

| Components | Example 8 | Example 9 | Comparative Example 1 | Comparative Example 2 | Comparative Example 3 |
|---|---|---|---|---|---|
| Organopolysiloxane (II) | 100 | 100 | 100 | 100 | 100 |
| Ureide compound (I) | (Ie) 5 | (Ib) 1.9 | - | (f) 5 | (g) 5 |
| Organohydrogenpolysiloxane (III) | 3.58 | 2.26 | 3.58 | 3.58 | 3.58 |
| Surfactant (IV) (Note 1) | 0.75 | 0.76 | 0.75 | 0.75 | 0.75 |
| Platinum group metal-based catalyst (V) (Note 2) | 150 | 150 | 150 | 150 | 150 |
| Water (VI) | 1962 | 1171 | 1962 | 1962 | 1962 |
| Water-soluble resin polyvinyl alcohol (Note 1) | 5.02 | 5.08 | 5.02 | 5.02 | 5.02 |
| Ethynyl cyclohexanol | 0.39 | 0.21 | 0.39 | 0.39 | 0.39 |

| | | | | | |
|---|---|---|---|---|---|
| Note 1: parts by mass based on 100 parts by mass of "(II)+(III)" Note 2: (ppm) in terms of the mass of the platinum relative to the mass of "(II)+(III)" | | | | | |

**[Table 3]**

| Measured items | Base material | Example 1 | Example 2 | Example 3 | Example 4 | Example 5 | Example 6 | Example 7 |
|---|---|---|---|---|---|---|---|---|
| Coatablity (Note 1) | PET (Note 3) | Good | Good | Good | Good | Good | Good | Good |
| Adhesiveness (Note 2) | | Good | Good | Good | Good | Good | Fair | Fair |
| Release force (N/2.5cm) | | 0.15 | 0.15 | 0.15 | 0.08 | 0.11 | 0.09 | 0.10 |
| Residual adhesion ratio (%) | | 94 | 97 | 94 | 99 | 98 | 95 | 98 |

| | | | | | | | | |
|---|---|---|---|---|---|---|---|---|
| Note 1: It was marked as "Good" when the composition was applied uniformly onto a base material, and marked as "Poor", when not applied uniformly. Note 2: It was marked as "Good" when the film did not fall off after 10 rubbings, marked as "Fair" when it fell off after 10 rubbings, and marked as "poor" when it fell off after a few rubbings. Note 3: PET = polyester film | | | | | | | | |

**[Table 4]**

| Measured items | Base materia 1 | Exampl e 8 | Exampl e 9 | Comparativ e Example 1 | Comparativ e Example 2 | Comparativ e Example 3 |
|---|---|---|---|---|---|---|
| Coatablity (Note 1) | PET (Note 1) | Good | Good | Good | Good | Poor |
| Adhesivenes s (Note 2) | | Fair | Fair | Poor | fair | - |
| Release force (N/2.5cm) | | 0.15 | 0.10 | 0.21 | 0.11 | - |
| Residual adhesion ratio (%) | | 94 | 95 | 97 | 84 | - |

| | | | | | | |
|---|---|---|---|---|---|---|
| Note 1: It was marked as "Good" when the composition was applied uniformly onto a base material, and marked as "Poor", when not applied uniformly. Note 2: It was marked as "Good" when the film did not fall off after 10 rubbings, marked as "Fair" when it fell off after 10 rubbings, and marked as "poor" when it fell off after a few rubbings. Note 3: PET = polyester film | | | | | | |

Examples 1 to 9 revealed that a cured film obtained by curing the inventive addition reaction-curable silicone emulsion composition adheres well to film base material. That is, Examples 1 to 9 and Comparative Example 1 revealed that good adhesiveness can be achieved by adding the ureide compound (Ib), (Ic), (Id), and (Ie). In particular, it is seen that the ureido compound (Ic) achieves a lighter release property and a higher residual adhesion ratio compared to (Ib), (Id), and (Ie), while exhibiting good adhesiveness. Examples 1 to 9 and Comparative Example 2 show that the ureido group-containing monomer can obtain better adhesiveness and better residual adhesion ratio than the ureido group-containing oligomer. Comparative Examples 2 and 3 show that dispersibility in the emulsion solution decreases, resulting in poor coatability when the amino group is converted to an epoxy group in order to improve adhesiveness and residual adhesion ratio.

As described above, the inventive addition reaction-curable silicone emulsion composition can form a cured film that is excellent in curability and that can be adhered well to a base material regardless of the type of the paper or plastic film base material. Further, this cured film can be used for a release film since the cured film has suitable release properties against adhesives. Furthermore, the release film obtained by applying the above-described silicone emulsion composition onto a paper or plastic film base material and being cured has a cured film formed that has suitable release properties against an adhesive while adhering well to base material, resulting in high practicality. Moreover, a cured film of silicone can be formed on the base material by, after applying the inventive composition, heating the applied base material under relatively mild conditions. Therefore, a release film imparted with release properties can be manufactured easily without using an expensive apparatus, and without going through a complicated process.

The present description includes the following embodiments.
[1]: An addition reaction-curable silicone emulsion composition comprising at least one ureide compound (I) selected from non-polymeric organic compounds having at least one ureide group per molecule, organopolysiloxane (II) having at least two alkenyl groups per molecule, and water (VI),
   wherein the addition reaction-curable silicone emulsion composition contains 1.0 part by mass or more of the ureide compound (I) and 100.0 parts by mass or more of the water (VI) based on 100.0 parts by mass of the organopolysiloxane (II).
[2] The addition reaction-curable silicone emulsion composition of the above [1], wherein the non-polymeric organic compounds are one or more kinds of compounds selected from the group consisting of a silane coupling agent monomer, 1-methylurea, ethylurea, 1,1-dimethylurea, 1,1-diethylurea, acetylurea, 2-hydroxyethylurea, butylurea, 2-chloroethylurea, phenylurea, cyclohexylurea, p-tolylurea, o-tolylurea, and benzylurea.
[3] The addition reaction-curable silicone emulsion composition of the above [2], wherein the silane coupling agent monomer has a structure represented by the following general formulae (Ia-1) and/or (Ia-2), 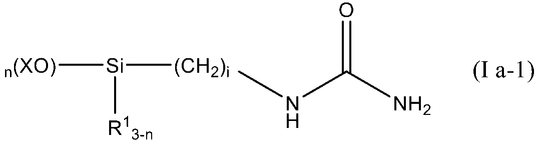 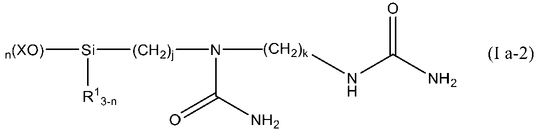 wherein R¹ represents a monovalent hydrocarbon group having 1 to 10 carbon atoms; "n" represents 2 or 3; "X" represents a monovalent hydrocarbon group having 1 to 4 carbon atoms or a hydrogen atom; and "i", "j", and "k" represent an integer of 2 to 20.
[4] The addition reaction-curable silicone emulsion composition of the above [1] to [3], comprising:
   1 to 15 parts by mass of the ureide compound (I);
   100 parts by mass of the organopolysiloxane (II) represented by the following general formula (II-1) and having absolute viscosity at 25°C within a range of 10 mPa·s to 50,000 mPa·s with 30% toluene diluted viscosity,

      (R²₃Si-O_{1/2})ₚ(R²₂Si-O_{2/2})_{q}(R²Si-O_{3/2})ᵣ(Si-O_{4/2})ₛ (II-1)
   wherein R²s may be the same or different to each other, each represent a group selected from the group consisting of unsubstituted or substituted monovalent hydrocarbon groups having 1 to 20 carbon atoms and not having aliphatic unsaturated bond and alkenyl groups having 2 to 12 carbon atoms and optionally having an intervening oxygen atom, at least two of the R²s are alkenyl groups, and "p", "q", "r", and "s" satisfy 2≤p, 0≤q≤30,000, 0≤r, 0≤s, and 0≤r+s≤30;
   1 to 30 parts by mass of an organohydrogenpolysiloxane (III) having at least two hydrogen atoms bonded directly to an Si atom per molecule;
   0.1 to 20 parts by mass of a surfactant (IV) based on 100 parts by mass of a total amount of the organopolysiloxane (II) and the organohydrogenpolysiloxane (III);
   a catalytic amount of a platinum group metal-based catalyst (V); and
   100 to 10,000 parts by mass of water (VI).
[5] A release film wherein a cured film of the addition reaction-curable silicone emulsion composition of any one of the above [1] to [4] is formed on a paper or plastic film base material.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An addition reaction-curable silicone emulsion composition comprising at least one ureide compound (I) selected from non-polymeric organic compounds having at least one ureide group per molecule, organopolysiloxane (II) having at least two alkenyl groups per molecule, and water (VI),
wherein the addition reaction-curable silicone emulsion composition contains 1.0 part by mass or more of the ureide compound (I) and 100.0 parts by mass or more of the water (VI) based on 100.0 parts by mass of the organopolysiloxane (II).

2. The addition reaction-curable silicone emulsion composition according to claim 1, wherein the non-polymeric organic compounds are one or more kinds of compounds selected from the group consisting of a silane coupling agent monomer, 1-methylurea, ethylurea, 1,1-dimethylurea, 1,1-diethylurea, acetylurea, 2-hydroxyethylurea, butylurea, 2-chloroethylurea, phenylurea, cyclohexylurea, p-tolylurea, o-tolylurea, and benzylurea.

3. The addition reaction-curable silicone emulsion composition according to claim 2, wherein the silane coupling agent monomer has a structure represented by the following general formulae (Ia-1) and/or (Ia-2), 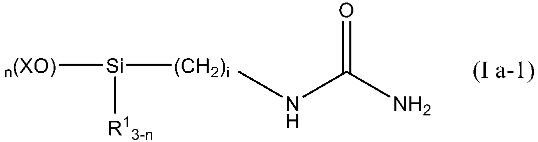 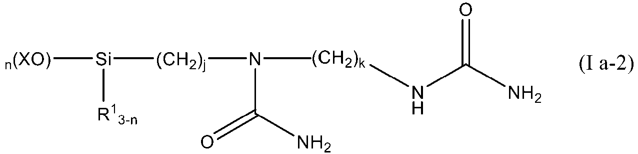 wherein R¹ represents a monovalent hydrocarbon group having 1 to 10 carbon atoms; "n" represents 2 or 3; "X" represents a monovalent hydrocarbon group having 1 to 4 carbon atoms or a hydrogen atom; and "i", "j", and "k" represent an integer of 2 to 20.

4. The addition reaction-curable silicone emulsion composition according to claim 1, comprising:
1 to 15 parts by mass of the ureide compound (I);
100 parts by mass of the organopolysiloxane (II) represented by the following general formula (II-1) and having absolute viscosity at 25°C within a range of 10 mPa·s to 50,000 mPa·s with 30% toluene diluted viscosity,
(R²₃Si-O_{1/2})ₚ(R²₂Si-O_{2/2})_{q}(R²Si-O_{3/2})ᵣ(Si-O_{4/2})ₛ (II-1)
wherein R²s may be the same or different to each other, each represent a group selected from the group consisting of unsubstituted or substituted monovalent hydrocarbon groups having 1 to 20 carbon atoms and not having aliphatic unsaturated bond and alkenyl groups having 2 to 12 carbon atoms and optionally having an intervening oxygen atom, at least two of the R²s are alkenyl groups, and "p", "q", "r", and "s" satisfy 2≤p, 0≤q≤30,000, 0≤r, 0≤s, and 0≤r+s≤30;
1 to 30 parts by mass of an organohydrogenpolysiloxane (III) having at least two hydrogen atoms bonded directly to an Si atom per molecule;
0.1 to 20 parts by mass of a surfactant (IV) based on 100 parts by mass of a total amount of the organopolysiloxane (II) and the organohydrogenpolysiloxane (III);
a catalytic amount of a platinum group metal-based catalyst (V); and
100 to 10,000 parts by mass of water (VI).

5. A release film wherein a cured film of the addition reaction-curable silicone emulsion composition according to any one of claims 1 to 4 is formed on a paper or plastic film base material.
